# EUROPÄISCHE PATENTSCHRIFT

(11) **EP 3 348 718 B1**
(45) Veröffentlichungstag und Bekanntmachung des Hinweises auf die Patenterteilung: **02.09.2020**
(21) Anmeldenummer: 18150617.1
(22) Anmeldetag: 08.01.2018
(51) Int. Cl.: E03C 1/23, F16K 31/04

(54) **BETÄTIGUNGSVORRICHTUNG FÜR EIN VENTIL EINER ABLAUFANORDNUNG FÜR EIN BECKEN**
VALVE ACTUATION DEVICE FOR AN OUTLET ASSEMBLY FOR A BASIN
DISPOSITIF D'ACTIONNEMENT POUR UNE SOUPAPE D'UN DISPOSITIF D'ÉCOULEMENT POUR UN BASSIN

(30) Priorität: 12.01.2017 DE 102017100535
(43) Veröffentlichungstag der Anmeldung: 18.07.2018
(73) Patentinhaber: BLANCO GmbH + Co KG, 75038 Oberderdingen (DE)
(72) Erfinder: Koska, Reinhard, 76228 Karlsruhe (DE); Scheffler, Olaf, 70191 Stuttgart (DE)
(74) Vertreter: Hoeger, Stellrecht & Partner Patentanwälte mbB

(56) Entgegenhaltungen:
- EP-A1- 2 169 125
- DE-U1-202007 012 241
- JP-A- 2001 311 196

## Beschreibung

Die vorliegende Erfindung betrifft eine Betätigungsvorrichtung zum Öffnen und Schließen eines Ventils einer Ablaufanordnung für ein Becken, wobei die Betätigungsvorrichtung
ein Ankopplungselement zum Ankoppeln eines Kraftübertragungselements an die Betätigungsvorrichtung,
einen elektrischen Motor zum Antreiben einer Bewegung des Ankopplungselements von einer ersten Arbeitsposition in eine zweite Arbeitsposition und einer Bewegung des Ankopplungselements von der zweiten Arbeitsposition in die erste Arbeitsposition,
eine Steuerungsvorrichtung zum Steuern des Motors und
eine Sensorvorrichtung zum Erfassen eines von einer Bedienungsperson durchgeführten Betätigungsvorgangs
umfasst.

Bei bekannten Betätigungsvorrichtungen dieser Art ist die Sensorvorrichtung in einer Bedieneinheit und der Motor in einer Motoreinheit angeordnet, wobei die Bedieneinheit und die Motoreinheit voneinander beabstandet getrennt montiert werden.

Insbesondere wird die Bedieneinheit an einer Arbeitsplatte oder Spüle montiert, während die Motoreinheit separat von der Bedieneinheit in der Nähe der Ablaufanordnung, beispielsweise in einem Küchen-Unterschrank, montiert wird.

Die JP 2001 311196 A offenbart eine Betätigungsvorrichtung gemäß dem Oberbegriff von Anspruch 1, wobei der Motor, die Steuerungsvorrichtung und die Sensorvorrichtung in einem gemeinsamen Gehäuse angeordnet sind, wobei die Betätigungsvorrichtung eine Getriebeeinheit umfasst, welche eine von dem Motor erzeugte Drehbewegung in eine Linearbewegung des Ankopplungselements umwandelt, und wobei das Ankopplungselement verschiebbar an der Getriebeeinheit geführt ist.

Die EP 2 169 125 A1 offenbart eine Betätigungsvorrichtung zum Öffnen und Schließen eines Ventils einer Ablaufanordnung für ein Spülbecken, die ein Ankopplungselement zum Ankoppeln eines Kraftübertragungselements an die Betätigungsvorrichtung, einen elektrischen Motor zum Antreiben einer Bewegung des Ankopplungselements von einer ersten Arbeitsposition in eine zweite Arbeitsposition und einer Bewegung des Ankopplungselements von der zweiten Arbeitsposition in die erste Arbeitsposition, eine Steuerungsvorrichtung zum Steuern des Motors und eine Sensorvorrichtung zum Erfassen eines von einer Bedienungsperson durchgeführten Betätigungsvorgangs umfasst, wobei der Motor, die Steuerungsvorrichtung und die Sensorvorrichtung in einem gemeinsamen Gehäuse angeordnet sind und wobei die Betätigungsvorrichtung eine Getriebeeinheit umfasst, welche eine von dem Motor erzeugte Drehbewegung in eine Linearbewegung des Ankopplungselements umwandelt.

Der vorliegenden Erfindung liegt die Aufgabe zugrunde, eine Betätigungsvorrichtung der eingangs genannten Art zu schaffen, welche einfach und rasch und vorzugsweise platzsparend montierbar ist.

Diese Aufgabe wird durch eine Betätigungsvorrichtung nach Anspruch 1 gelöst.

Der vorliegenden Erfindung liegt das Konzept zugrunde, den Motor, die Steuerungsvorrichtung und die Sensorvorrichtung in eine kombinierte Bedien- und Motoreinheit zu integrieren, so dass diese Bestandteile der Betätigungsvorrichtung als eine Einheit handhabbar und montierbar sind, was den Montageaufwand für die Montage der Betätigungsvorrichtung verringert.

Die kombinierte Bedien- und Motoreinheit kann besonders rasch und einfach an einer Durchtrittsöffnung einer Arbeitsplatte oder einer Spüle montiert werden.

Außerdem kann die kombinierte Bedien- und Motoreinheit im Vergleich zu einer Kombination aus einer separaten Bedieneinheit und einer separaten Motoreinheit besonders kompakt und platzsparend gestaltet sein.

Bei einer bevorzugten Ausgestaltung der Erfindung ist vorgesehen, dass das Gehäuse einen Gehäusekopf umfasst, welcher einen Gehäuseflansch zum Auflegen des Gehäuses auf eine Oberseite einer Arbeitsplatte oder einer Spüle aufweist.

Um zu erreichen, dass die Betätigungsvorrichtung an der Arbeitsplatte oder an der Spüle auszuführende Arbeiten möglichst wenig behindert, ist es günstig, wenn der Gehäuseflansch eine Höhe von höchstens ungefähr 10 mm, vorzugsweise von höchstens ungefähr 7 mm, insbesondere von höchstens ungefähr 5 mm, aufweist.

Als Höhe des Gehäuseflansches ist dabei dessen Ausdehnung in vertikaler Richtung (im montierten Zustand der Betätigungsvorrichtung) anzusehen.

Für eine einfache Montage des Gehäuses an einer Arbeitsplatte oder einer Spüle ist es günstig, wenn das Gehäuse ein Außengewinde aufweist, in welches eine Haltemutter eingreift.

Wenn die Betätigungsvorrichtung an einer Durchtrittsöffnung einer Arbeitsplatte oder einer Spüle angeordnet ist, kann die Arbeitsplatte beziehungsweise die Spüle zwischen dem Gehäusekopf und der Haltemutter oder einem von der Haltemutter getragenen Gleitring eingespannt werden.

Die Betätigung der Betätigungsvorrichtung durch eine Bedienungsperson erfolgt vorzugsweise dadurch, dass die Bedienungsperson - beispielsweise mittels eines Fingers - einen leichten Druck auf einen Betätigungsbereich der Betätigungsvorrichtung, welcher beispielsweise an einer Sensorkappe der Betätigungsvorrichtung angeordnet ist, ausübt.

Die Sensorvorrichtung ist dabei so eingestellt, dass ein einen Betätigungsvorgang anzeigendes Betätigungssignal dann erzeugt wird, wenn die Betätigungskraft eine Betätigungsschwelle übersteigt.

Dabei kann die Betätigungsschwelle beispielsweise im Bereich von ungefähr 2 N bis ungefähr 8 N, insbesondere im Bereich von ungefähr 3 N bis ungefähr 7 N, liegen.

Bei einer bevorzugten Ausgestaltung der Erfindung ist vorgesehen, dass die Sensorvorrichtung und/oder die Steuerungsvorrichtung einen programmierbaren Prozessor umfasst.

Die Betätigungsschwelle ist dann vorzugsweise mittels der auf dem betreffenden Prozessor laufenden Software einstellbar.

Wenn der Betätigungsbereich der Betätigungsvorrichtung beschädigt und/oder deformiert wird, kann die Betätigungsschwelle mittels der auf dem betreffenden Prozessor laufenden Software neu kalibriert beziehungsweise angepasst werden.

Die Sensorvorrichtung, die Steuerungsvorrichtung und der Motor sind durch elektrische Signal- und/oder Steuerungsleitungen miteinander verbunden.

Da die einen Betätigungsvorgang auslösende Verformung des Betätigungsbereichs so geringfügig sein kann, dass sie von der Bedienungsperson mit bloßem Auge nicht wahrnehmbar ist, ist es günstig, wenn die Betätigungsvorrichtung eine optische Statusanzeigevorrichtung zum Anzeigen des aktuellen Status der Betätigungsvorrichtung umfasst.

Insbesondere kann vorgesehen sein, dass die Statusanzeigevorrichtung ein im Betrieb der Betätigungsvorrichtung für eine Bedienungsperson sichtbares Leuchtelement umfasst.

Ein solches Leuchtelement kann beispielsweise als ein (ganz oder teilweise transparent ausgebildeter) Lichtring ausgebildet sein.

Bei einer bevorzugten Ausgestaltung der Erfindung ist vorgesehen, dass die Leuchtintensität des Leuchtelements in Abhängigkeit von dem Status der Betätigungsvorrichtung in mindestens zwei, vorzugsweise in mindestens drei, voneinander verschiedene Stufen schaltbar ist.

Insbesondere kann vorgesehen sein, dass die Leuchtintensität des Leuchtelements in einen Schließstellungs-Betriebszustand schaltbar ist, welcher der Schließstellung des Ventils zugeordnet ist.

Vorzugsweise ist vorgesehen, dass das Leuchtelement in dem Schließstellungs-Betriebszustand mit geringer Intensität leuchtet.

Ferner kann vorgesehen sein, dass die Leuchtintensität des Leuchtelements in einen Betätigungs-Betriebszustand schaltbar ist, welcher die Durchführung eines Betätigungsvorgangs an der Betätigungsvorrichtung anzeigt.

Vorzugsweise ist vorgesehen, dass das Leuchtelement in dem Betätigungs-Betriebszustand mit hoher Leuchtintensität leuchtet.

Die Leuchtintensität des Leuchtelements wird insbesondere dann in den Betätigungs-Betriebszustand geschaltet, wenn die Sensorvorrichtung einen Betätigungsvorgang detektiert.

Es kann vorgesehen sein, dass die Leuchtintensität des Leuchtelements in dem Betätigungs-Betriebszustand verbleibt, bis die Bedienungsperson keinen Druck mehr auf den Betätigungsbereich der Betätigungsvorrichtung ausübt und damit den Betätigungsvorgang beendet.

Alternativ hierzu kann auch vorgesehen sein, dass der Betätigungs-Betriebszustand des Leuchtelements automatisch nach einer vorgegebenen Zeitspanne beendet wird.

Außerdem kann vorgesehen sein, dass die Leuchtintensität des Leuchtelements in einen Offenstellungs-Betriebszustand schaltbar ist, welcher der Offenstellung des Ventils zugeordnet ist.

Vorzugsweise ist vorgesehen, dass das Leuchtelement in dem Offenstellungs-Betriebszustand nicht leuchtet.

Das Leuchten des Leuchtelements kann beispielsweise mittels eines oder mehrerer Leuchtmittel bewirkt werden, die als LEDs ausgebildet sein können.

Ferner umfasst die Betätigungsvorrichtung eine Getriebeeinheit, welche eine von dem Motor erzeugte Drehbewegung in eine Linearbewegung des Ankopplungselements umwandelt.

Die Getriebeeinheit ist lösbar an dem Gehäuse der Betätigungsvorrichtung (und damit an der kombinierten Bedien- und Motoreinheit) festlegbar, insbesondere verrastbar.

Die Verrastung kann beispielsweise über zwei oder mehr Schnapphaken erfolgen, welche an der Getriebeeinheit oder an dem Gehäuse angeordnet sein können.

Das Ankopplungselement ist verschiebbar an der Getriebeeinheit geführt.

Das Ankopplungselement ist vorzugsweise im montierten Zustand der Betätigungsvorrichtung in im Wesentlichen horizontaler Richtung von der ersten Arbeitsposition in die zweite Arbeitsposition bewegbar.

Der an das Ankopplungselement angekoppelte Endbereich eines Kraftübertragungselements, beispielsweise eines Bowdenzugs, mittels welchem die Betätigungsvorrichtung und eine Antriebsvorrichtung der Ablaufanordnung zum Antreiben einer Bewegung des Ventils von der Schließstellung in die Offenstellung gekoppelt sind, verläuft dann ebenfalls im Wesentlichen in horizontaler Richtung.

Dies bietet den Vorteil, dass die Betätigungsvorrichtung mit dem daran angeschlossenen Kraftübertragungselement eine sehr geringe Bauhöhe aufweist.

Wenn auch der ablaufanordnungsseitige Endbereich des Kraftübertragungselements im Wesentlichen horizontal ausgerichtet ist, so bietet dies den Vorteil, dass eine unerwünschte Verwindung des Kraftübertragungselements, insbesondere des Bowdenzugs, welche die Kraftübertragungsfunktion des Kraftübertragungselements beeinträchtigen könnte, ausgeschlossen wird.

Die Getriebeeinheit ist vorzugsweise in mehreren verschiedenen Winkelpositionen bezüglich einer vertikalen Längsmittelachse der Betätigungsvorrichtung an dem Gehäuse der Betätigungsvorrichtung festlegbar.

Hierdurch ist es möglich, die Getriebeeinheit optimal in Bezug auf die Antriebsvorrichtung der Ablaufanordnung auszurichten, wenn das Gehäuse der kombinierten Bedien- und Motoreinheit bereits fest an einer Arbeitsplatte oder einer Spüle montiert ist.

Die Steuerungsvorrichtung ist vorzugsweise an einer Platine angeordnet, welche zwischen dem Gehäusekopf und dem Motor angeordnet ist.

Vorzugsweise ist die Platine unmittelbar benachbart zu einem Endbereich des Motors angeordnet.

Bei einer besonderen Ausgestaltung der Erfindung ist vorgesehen, dass die Platine eine Durchtrittsöffnung aufweist, durch welche ein Endbereich des Motors sich hindurch erstreckt.

Auch die Sensorvorrichtung ist vorzugsweise an der Platine angeordnet.

Die Sensorvorrichtung kann mindestens ein federelastisches Kontaktelement und/oder mindestens einen kapazitiven Sensor umfassen, um einen Betätigungsvorgang zu detektieren.

Insbesondere kann vorgesehen sein, dass durch Druck auf einen Betätigungsbereich einer Sensorkappe ein Sensorkörper gegen einen oder mehrere, vorzugsweise federelastische, Kontaktelemente gedrückt wird und hierdurch ein Schaltkontakt hergestellt wird und/oder eine Verformung des Kontaktelements beziehungsweise der Kontaktelemente mittels eines Sensors, beispielsweise eines kapazitiven Sensors oder eines piezoelektrischen Sensors, detektiert wird.

Die Sensorkappe ist vorzugsweise aus einem metallischen Material, beispielsweise aus einem Edelstahlmaterial, ausgebildet.

Vorzugsweise ist die Sensorkappe zumindest an ihrer Oberseite fugenfrei ausgebildet, so dass kein auf der Sensorkappe aufliegendes Wasser in das Gehäuse der Betätigungsvorrichtung eindringen kann.

Außerdem bewirkt die geschlossene Oberseite der Sensorkappe einen ästhetisch hochwertigen optischen Eindruck der Betätigungsvorrichtung von der Bedienseite her.

Die erfindungsgemäße Betätigungsvorrichtung eignet sich insbesondere zur Verwendung in einer Kombination aus einer Ablaufanordnung für ein Becken, welche ein Ventil zum Verschließen eines Beckenablaufs und eine Antriebsvorrichtung zum Antreiben einer Bewegung des Ventils von einer Schließstellung in eine Offenstellung umfasst, einer erfindungsgemäßen Betätigungsvorrichtung und einem Kraftübertragungselement, insbesondere einem Bowdenzug, zum Koppeln der Betätigungsvorrichtung und der Antriebsvorrichtung.

Das Becken, für welches die Ablaufanordnung vorgesehen ist, ist vorzugsweise ein Spülbecken, insbesondere ein Spülbecken einer Küchenspüle.

Die erfindungsgemäße Betätigungsvorrichtung kann vorzugsweise an allen Spülen und Arbeitsplatten mit üblichen Materialstärken von beispielsweise bis zu 50 mm montiert werden.

Die erfindungsgemäße Betätigungsvorrichtung kann als elektrische Ablauffernbedienung für eine Ablaufanordnung mit einem Ventil zum Verschließen eines Beckenablaufs verwendet werden.

Die erfindungsgemäße Betätigungsvorrichtung ist grundsätzlich mit allen Exzenter-Ablaufgarnituren verwendbar und kann somit gegen alle bereits vorhandenen Ablauffernbedienungen ausgetauscht werden.

Die erfindungsgemäße Betätigungsvorrichtung weist somit eine hohe Einsatzflexibilität auf.

Da das Gehäuse der Betätigungsvorrichtung nur geringfügig über die Oberseite einer Arbeitsplatte oder einer Spüle, an welcher die Betätigungsvorrichtung montiert ist, übersteht, beeinträchtigt die Betätigungsvorrichtung an der Arbeitsplatte oder der Spüle durchzuführende Arbeiten nicht oder allenfalls geringfügig.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine perspektivische Darstellung einer Kombination aus einer Ablaufanordnung eines Beckens, insbesondere eines Spülbeckens einer Küchenspüle, welche ein Ventil zum Verschließen eines Beckenablaufs und eine Antriebsvorrichtung zum Antreiben einer Bewegung des Ventils von einer Schließstellung in eine Offenstellung umfasst, einer Betätigungsvorrichtung zum Öffnen und Schließen des Ventils und einem Kraftübertragungselement zum Koppeln der Betätigungsvorrichtung und der Antriebsvorrichtung;
- Fig. 2: eine teilweise geschnittene Seitenansicht der Kombination aus Fig. 1, wobei das Ventil sich in der Schließstellung und ein Ankopplungselement zum Ankoppeln des Kraftübertragungselements an die Betätigungsvorrichtung sich in einer ersten Arbeitsposition befindet;
- Fig. 3: eine der Fig. 2 entsprechende teilweise geschnittene Ansicht der Kombination, wobei das Ventil sich in der Offenstellung und das Ankopplungselement sich in einer zweiten Arbeitsposition befindet;
- Fig. 4: eine Explosionsdarstellung der Betätigungsvorrichtung aus den Fig. 1 bis 3;
- Fig. 5: eine perspektivische Darstellung eines Gehäusekopfes der Betätigungsvorrichtung;
- Fig. 6: eine perspektivische Darstellung einer Platine der Betätigungsvorrichtung;
- Fig. 7: eine längs einer vertikalen Längsmittelebene der Betätigungsvorrichtung geschnittene perspektivische Darstellung der Betätigungsvorrichtung, wobei das Kopplungselement sich in der zweiten Arbeitsposition befindet;
- Fig. 8: eine perspektivische Darstellung der Betätigungsvorrichtung, wobei eine Getriebeeinheit der Betätigungsvorrichtung von einem einen Motor, eine Steuervorrichtung und eine Sensorvorrichtung der Betätigungsvorrichtung beinhaltenden Gehäuse gelöst ist;
- Fig. 9: eine perspektivische Darstellung der Betätigungsvorrichtung aus Fig. 8, nachdem die Getriebeeinheit und das Gehäuse durch Verrastung miteinander verbunden worden sind, wobei das Kopplungselement sich in der zweiten Arbeitsposition befindet; und
- Fig. 10: eine der Fig. 9 entsprechende perspektivische Darstellung der Betätigungsvorrichtung, wobei das Kopplungselement sich in der ersten Arbeitsposition befindet.

Gleiche oder funktional äquivalente Elemente sind in allen Figuren mit denselben Bezugszeichen bezeichnet.

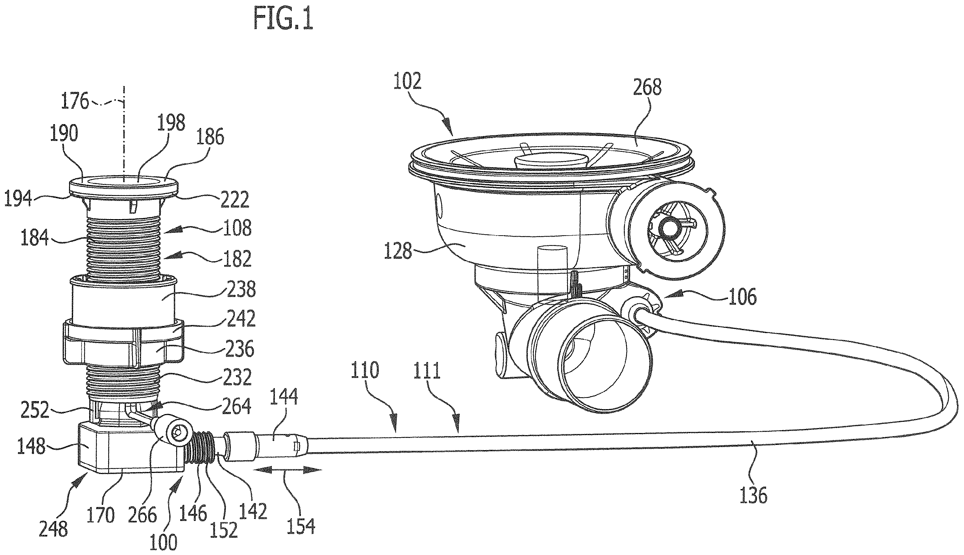

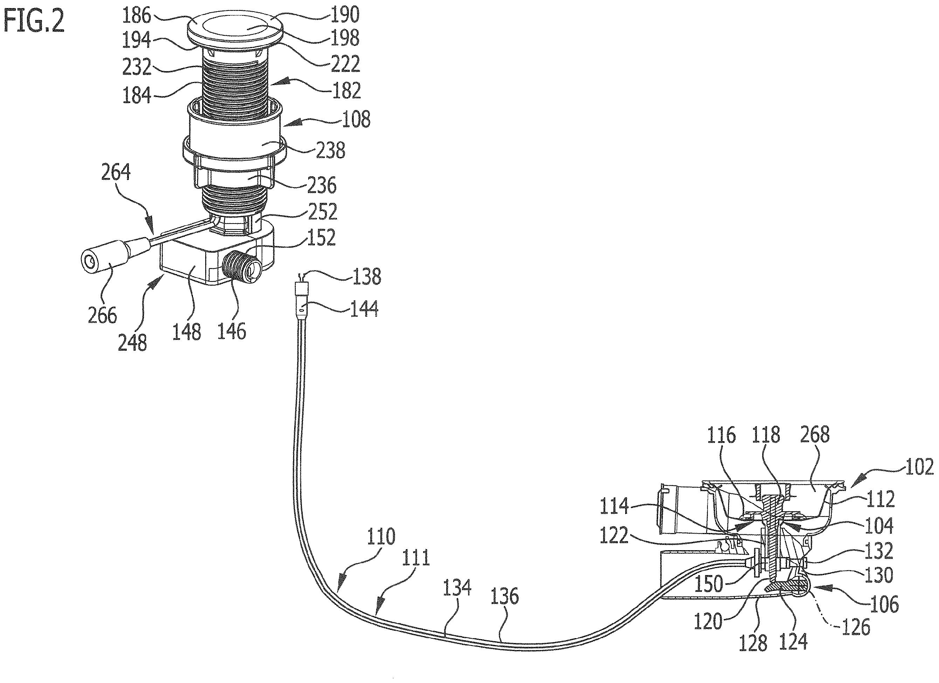

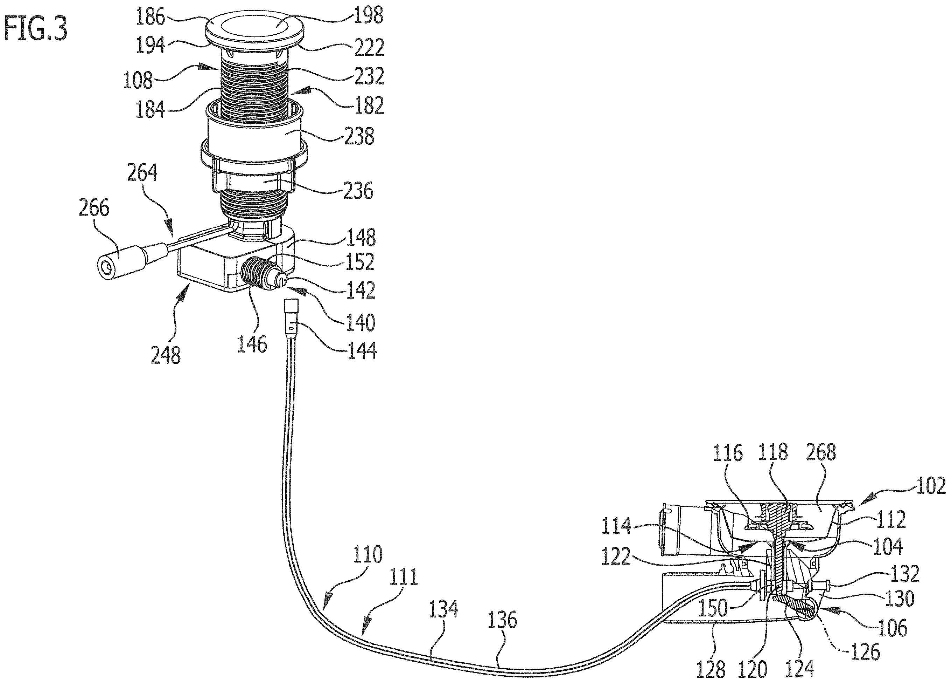

Die Fig. 1 bis 3 zeigen eine als Ganzes mit 100 bezeichnete Kombination aus einer Ablaufanordnung 102 für ein (nicht dargestelltes) Becken, insbesondere für ein Spülbecken einer Küchenspüle, welche ein Ventil 104 zum Verschließen eines Beckenablaufs des Beckens und eine Antriebsvorrichtung 106 zum Antreiben einer Bewegung des Ventils 104 von seiner in Fig. 2 dargestellten Schließstellung in seine in Fig. 3 dargestellte Offenstellung umfasst, einer Betätigungsvorrichtung 108 zum Auslösen einer Öffnungsbewegung und einer Schließbewegung des Ventils 104 der Ablaufanordnung 102 und einem Kraftübertragungselement 110, beispielsweise in Form eines Bowdenzugs 111, zum Koppeln der Betätigungsvorrichtung 108 und der Antriebsvorrichtung 106 der Ablaufanordnung 102, um eine Antriebskraft zum Öffnen oder Schließen des Ventils 104 von der Betätigungsvorrichtung 108 auf die Antriebsvorrichtung 106 zu übertragen.

Wie aus den Fig. 2 und 3 zu ersehen ist, umfasst die Ablaufanordnung 102 einen Kelch 112, welcher an dem Boden des Beckens festlegbar oder einstückig mit dem Boden des Beckens ausgebildet ist.

Der Kelch 112 weist eine Ablauföffnung 114 auf, die in der in Fig. 2 dargestellten Schließstellung des Ventils 104 durch einen Verschlussstopfen 118 verschlossen ist, welcher über ein Dichtelement 116 flüssigkeitsdicht abdichtend an einem die Ablauföffnung 114 umgebenden Bodenbereich des Kelches 112 anliegt.

Der Verschlussstopfen 118 weist einen Führungsstift 120 auf, mittels welchem der Verschlussstopfen 118 in einer Führungshülse 122 in - im montierten Zustand der Ablaufanordnung 102 - vertikaler Richtung verschieblich geführt ist.

An einem unteren Endbereich des Führungsstifts 120 greift ein Hubfinger 124 an, welcher um eine (vorzugsweise im montierten Zustand der Ablaufanordnung 102 im Wesentlichen horizontal ausgerichtete) Schwenkachse 126 schwenkbar an einem Grundkörper 128 der Ablaufanordnung 102 angeordnet ist.

Der Hubfinger 124 ist drehfest mit einem Schwenkarm 130 verbunden, welcher seinerseits in Eingriff mit einem ablaufanordnungsseitigen Endbereich 132 eines Drahtseils 134 des Bowdenzugs 111 steht.

Der Bowdenzug 111 umfasst ferner eine Hülle 136, welche als mechanische Führung des Drahtseils 134 und als Gegenlager für die über das Drahtseil 134 übertragenen Zug- und Druckkräfte dient.

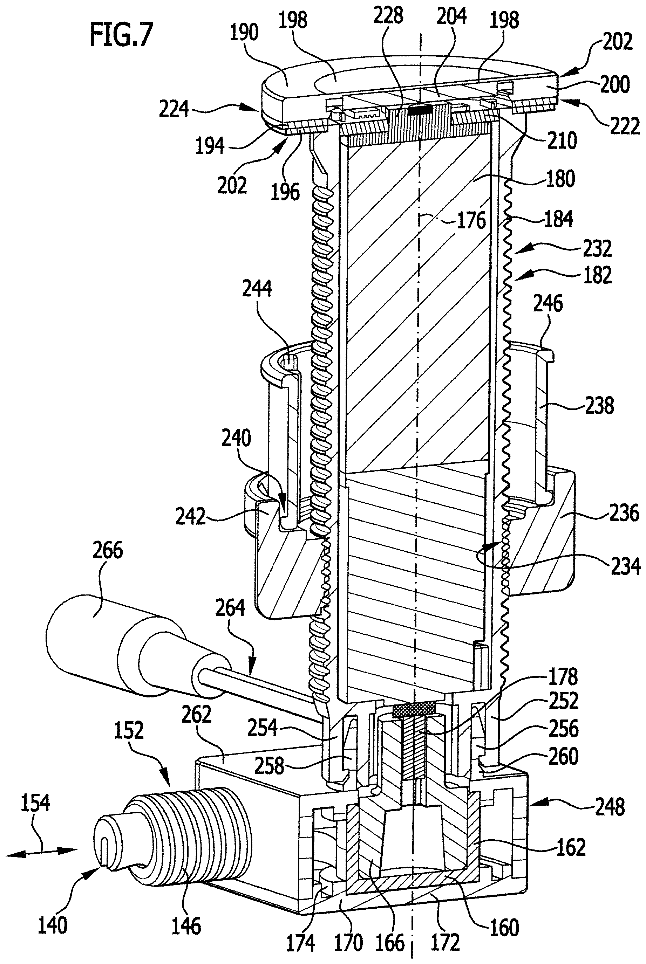

Ein betätigungsvorrichtungsseitiger Endbereich 138 des Drahtseils 134 ist im montierten Zustand der Kombination 100 in eine beispielsweise in den Fig. 7 bis 10 dargestellte Aufnahme 140 eines Ankopplungselements 142 der Betätigungsvorrichtung 108 eingelegt und in derselben mittels einer an der Hülle 136 vorgesehenen Schraubhülse 144 gesichert.

Zu diesem Zweck greift ein Innengewinde der Schraubhülse 144 in ein hierzu komplementäres Außengewinde 146 eines Getriebegehäuses 148 der Betätigungsvorrichtung 108 ein.

In den Fig. 2 und 3 ist der betätigungsvorrichtungsseitige Endbereich 138 des Drahtseils 134 von dem Ankopplungselement 142 gelöst dargestellt. Im Betrieb der Kombination 100 ist aber der betätigungsvorrichtungsseitige Endbereich 138 stets an das Ankopplungselement 142 angekoppelt und daran gesichert.

An dem entgegengesetzten Ende der Hülle 136 des Bowdenzugs 111 ist eine weitere Schraubhülse 150 vorgesehen, welche, vorzugsweise ebenfalls durch Verschraubung, an der Ablaufanordnung 102 festgelegt ist.

Das Außengewinde 146 des Getriebegehäuses 148 ist an einem im Wesentlichen hohlzylindrischen Führungsstutzen 152 des Getriebegehäuses 148 angeordnet, in welchem das - vorzugsweise im Wesentlichen zylindrisch ausgebildete - Ankopplungselement 142 längs einer (im montierten Zustand der Betätigungsvorrichtung 108 vorzugsweise im Wesentlichen horizontal ausgerichteten) Verschieberichtung 154 verschieblich geführt ist.

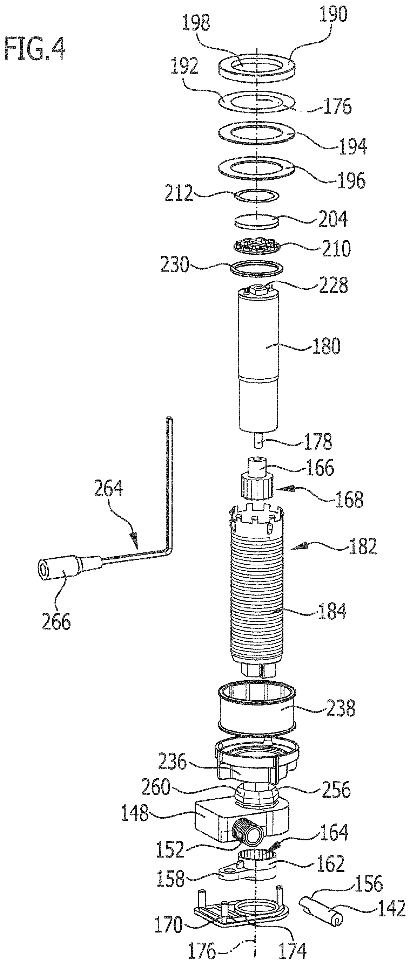

Ein im Innenraum des Getriebegehäuses 148 angeordneter Endbereich 156 des Ankopplungselements 142 ist gelenkig mit einem Schwenkarm 158 eines Getriebe-Kopplungselements 160 verbunden (siehe Fig. 4).

Das Getriebe-Kopplungselement 160 umfasst einen im Wesentlichen hohlzylindrischen Kopplungsteil 162, welcher an seiner Innenseite mit einer Verzahnung 164 versehen ist, in die eine hierzu komplementäre, an der Außenseite eines Motor-Kopplungselements 166 vorgesehene Verzahnung 168 eingreift.

Das Getriebegehäuse 148 ist an seiner Unterseite mittels eines Getriebegehäusedeckels 170 verschlossen.

Der Getriebegehäusedeckel 170 ist insbesondere stoffschlüssig, beispielsweise durch Verklebung, und/oder formschlüssig, beispielsweise durch Verrastung, an dem Getriebegehäuse 148 festgelegt.

Von einer Bodenwand 172 des Gehäusedeckels 170 aus steht in den Innenraum des Getriebegehäuses 148 eine ringförmige Führungswand 174 vor, welche eine Aufnahme bildet, in der ein unterer Randbereich des Kopplungsteils 162 des Getriebe-Kopplungselements 160 um eine - im montierten Zustand der Betätigungsvorrichtung 108 im Wesentlichen vertikal ausgerichtete - Längsmittelachse 176 der Betätigungsvorrichtung 108 drehbar aufgenommen ist.

Das Motor-Kopplungselement 166 ist drehfest auf einer Motorwelle 178 eines elektrischen Motors 180 angeordnet, welcher in einem Gehäuse 182 der Betätigungsvorrichtung 108 angeordnet ist.

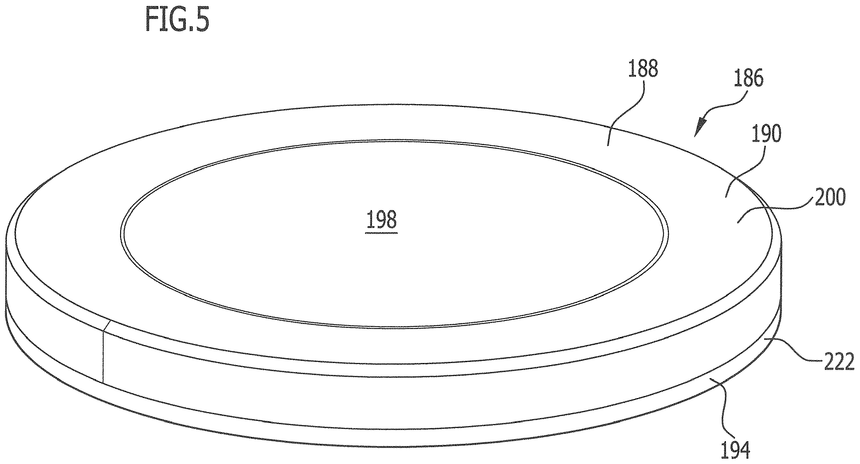

Das Gehäuse 182 der Betätigungsvorrichtung 108 umfasst einen im Wesentlichen hohlzylindrischen Grundkörper 184 und einen in Fig. 5 einzeln dargestellten Gehäusekopf 186, welcher ein oberes Ende des Grundkörpers 184 des Gehäuses 182 verschließt.

Der Gehäusekopf 186 umfasst einen die im montierten Zustand einer Bedienungsperson der Betätigungsvorrichtung 108 zugewandte Oberseite 188 des Gehäusekopfes 186 bildenden Sensorkopf 190, einen mittels einer kreisringförmigen Klebefolie 192 an einer Unterseite des Sensorkopfes 190 festgelegten Lichtring 194 und ein unter dem Lichtring 194 angeordnetes, kreisringförmiges Dichtelement 196, mittels welchem der Gehäusekopf 186 flüssigkeitsdicht abdichtend auf die Oberseite einer (nicht dargestellten) Arbeitsplatte oder einer Spüle auflegbar ist.

Wie am besten aus der Schnittdarstellung von Fig. 7 zu ersehen ist, umfasst der Sensorkopf 190 einen im Wesentlichen kreisscheibenförmigen mittigen Betätigungsbereich 198 mit geringer Materialstärke, der von einem im Wesentlichen hohlzylindrischen Flanschbereich 200 umgeben ist.

Der Flanschbereich 200 bildet mit der darunter angeordneten Klebefolie 192, dem darunter angeordneten Lichtring 194 und dem darunter angeordneten Dichtelement 196 einen Gehäuseflansch 202, mit welchem das Gehäuse 182 der Betätigungsvorrichtung 108 auf die Oberseite der Arbeitsplatte oder der Spüle auflegbar ist.

Unter dem mittigen Betätigungsbereich 198 des Gehäusekopfes 186 ist im Innenraum des Gehäuses 182 ein, vorzugsweise im Wesentlichen zylindrischer, Sensorkörper 204 angeordnet.

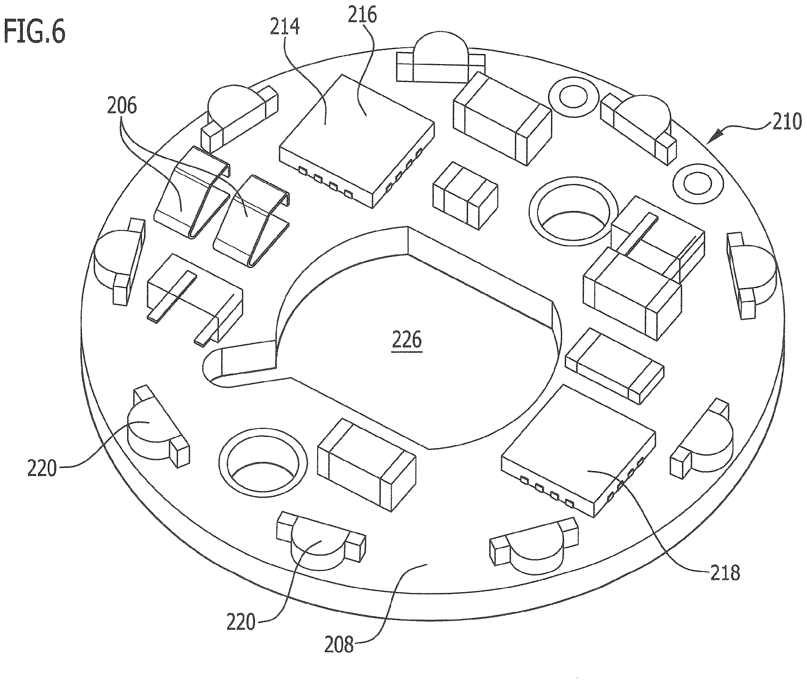

Der Sensorkörper 204 liegt auf einem oder mehreren, vorzugsweise federelastisch ausgebildeten, Kontaktelementen 206 auf, die an einer Oberseite 208 einer in Fig. 6 einzeln dargestellten Platine 210 angeordnet sind.

Zwischen dem Sensorkörper 204 und der Sensorkappe 190 kann ein ringförmiger Abstandshalter 212 (siehe Fig. 4) angeordnet sein.

Wenn eine Bedienungsperson, beispielsweise mittels eines Fingers, einen leichten Druck auf den Betätigungsbereich 198 der Sensorkappe 190 ausübt, so verlagert sich der Sensorkörper 204, was eine Verformung der Kontaktelemente 206 zur Folge hat.

Diese Verformung der Kontaktelemente 206 wird mittels einer an der Platine 210 angeordneten Sensorvorrichtung 214, die beispielsweise einen kapazitiven Sensor 216 umfasst, detektiert.

Die Sensorvorrichtung 214 erzeugt ein elektrisches Signal, das einen Betätigungsvorgang anzeigt, und übermittelt dieses Signal an eine an der Platine 210 angeordnete Steuervorrichtung 218 der Betätigungsvorrichtung 108, welche in Abhängigkeit von dem Signal eine Drehbewegung des elektrischen Motors 180 steuert.

Ferner sind an der Platine 210 ein oder mehrere Leuchtmittel 220, beispielsweise in Form von LEDs, angeordnet.

Die Leuchtmittel 220 sind vorzugsweise längs des Umfangs der Platine 210, besonders bevorzugt im Wesentlichen äquidistant längs des Umfangs verteilt, an der Platine 210 angeordnet.

Die Leuchtmittel 220 sind von der Steuerungsvorrichtung 218 in verschiedene Betriebszustände schaltbar.

Insbesondere kann vorgesehen sein, dass die Leuchtintensität der Leuchtmittel 220 in einen ersten Betriebszustand schaltbar ist, welcher der Schließstellung des Ventils 104 zugeordnet ist und in welchem die Leuchtmittel 220 mit geringer Intensität leuchten.

Ferner kann vorgesehen sein, dass die Leuchtmittel 220 in einen zweiten Betriebszustand schaltbar sind, welcher einem Betätigungsvorgang der Betätigungsvorrichtung 108 zugeordnet ist und in welchem die Leuchtmittel 220 mit hoher Leuchtintensität leuchten.

Außerdem kann vorgesehen sein, dass die Leuchtmittel 220 in einen dritten Betriebszustand schaltbar sind, welcher der Offenstellung des Ventils 104 zugeordnet ist und in welchem die Leuchtmittel 220 nicht leuchten.

Die Leuchtmittel 220 sind benachbart zu dem Lichtring 194 angeordnet, welcher das von den Leuchtmitteln 220 emittierte Licht passieren lässt, so dass das emittierte Licht am äußeren Umfang des Lichtrings 194 von einer Bedienungsperson der Betätigungsvorrichtung 108 wahrnehmbar ist.

Die Bedienungsperson ist somit anhand des jeweiligen Betriebszustands der Leuchtmittel 220 stets darüber informiert, ob sich das Ventil 104 der Ablaufanordnung 102 in der Offenstellung oder in der Schließstellung befindet.

Ferner erhält die Bedienungsperson eine unmittelbare Rückmeldung darüber, dass ein Betätigungsvorgang an der Betätigungsvorrichtung 108 ausgelöst worden ist, welcher eine Überführung des Ventils 104 von der Schließstellung in die Offenstellung oder von der Offenstellung in die Schließstellung zur Folge hat.

Der mittels der Leuchtmittel 220 beleuchtete Lichtring 194 bildet somit ein für eine Bedienungsperson sichtbares Leuchtelement 222, dessen Leuchtintensität in Abhängigkeit vom Status der Betätigungsvorrichtung 108 in drei voneinander verschiedene Stufen schaltbar ist.

Dieses Leuchtelement 222 bildet eine optische Statusanzeigevorrichtung 224 der Betätigungsvorrichtung 108, welche den aktuellen Status der Betätigungsvorrichtung 108 anzeigt.

Der Gehäuseflansch 202 des Gehäusekopfes 186 weist vorzugsweise eine Höhe von höchstens ungefähr 10 mm, insbesondere von höchstens ungefähr 7 mm, insbesondere von höchstens ungefähr 5 mm, auf.

Hierdurch wird erreicht, dass die Betätigungsvorrichtung 108 kein Hindernis für an der Arbeitsplatte oder an der Spüle durchzuführende Arbeiten darstellt.

Die Oberseite der Sensorkappe 190 ist durchgehend ausgebildet, so dass die Betätigungsvorrichtung 108 eine der Bedienungsperson zugewandte fugenlose Oberfläche aufweist. Hierdurch kann keine Flüssigkeit von der Oberseite der Betätigungsvorrichtung 108 her in deren Innenraum eindringen.

Die Platine 210, welche die Steuerungsvorrichtung 218 und die Sensorvorrichtung 214 der Betätigungsvorrichtung 108 trägt, ist zwischen dem Gehäusekopf 186 und dem elektrischen Motor 180, unmittelbar angrenzend an den Motor 180, angeordnet.

Wie aus den Fig. 6 und 7 zu ersehen ist, weist die Platine 210 eine Durchtrittsöffnung 226 auf, durch welche ein oberer Endbereich 228 des Motors sich hindurcherstreckt.

Der Gehäusekopf 186 ist in geeigneter Weise an dem Grundkörper 184 des Gehäuses 182 der Betätigungsvorrichtung 108 festgelegt, beispielsweise durch Stoffschluss, insbesondere durch Verklebung, und/oder durch Formschluss, insbesondere durch Verrastung.

Insbesondere kann vorgesehen sein, dass der Gehäusekopf 186 mittels eines Kleberings 230 (siehe Fig. 4) mit dem Grundkörper 184 des Gehäuses 182 verbunden ist.

Der Grundkörper 184 des Gehäuses 182 weist ein Außengewinde 232 auf, das mit einem hierzu komplementären Innengewinde 234 einer auf das Gehäuse 182 aufgeschraubten Haltemutter 236 in Eingriff steht.

Die Haltemutter 236 trägt einen das Gehäuse 182 umgebenden Gleitring 238, dessen unteres Ende vorzugsweise in eine Ringaufnahme 240 der Haltemutter 236 eingreift, welche radial nach außen von einer ringförmigen Führungswand 242 der Haltemutter 236 begrenzt ist (siehe insbesondere Fig. 7).

Der Gleitring 238 kann eine Vielzahl von sich radial nach innen erstreckenden Stegen 244 aufweisen, mit denen sich der Gleitring 238 an der Außenseite des Gehäuses 182 abstützen kann.

Der Gleitring 238 wirkt mit dem Gehäuseflansch 202 der Betätigungsvorrichtung 108 zusammen, um die Betätigungsvorrichtung 108 lösbar an einer (nicht dargestellten) Arbeitsplatte oder Spüle lösbar festzulegen.

Hierzu wird das Gehäuse 182 der Betätigungsvorrichtung 108 mit dem darin angeordneten Motor 180, der darin angeordneten Steuerungsvorrichtung 218 und der darin angeordneten Sensorvorrichtung 214 in eine (vorzugsweise im Wesentlichen kreisrunde) Durchtrittsöffnung der Arbeitsplatte beziehungsweise der Spüle eingeführt, bis der Gehäuseflansch 202 mit dem Dichtelement 196 an der Oberseite der Arbeitsplatte beziehungsweise der Spüle anliegt.

Anschließend wird die Haltemutter 236, welche den Gleitring 238 trägt, an dem Außengewinde 232 des Gehäuses 182 so weit nach oben geschraubt, bis die Oberseite 246 des Gleitrings 238 an der Unterseite der Arbeitsplatte beziehungsweise der Spüle anliegt, so dass die Arbeitsplatte beziehungsweise die Spüle zwischen dem Gehäuseflansch 202 und dem Gleitring 238 eingespannt ist.

Das Gehäuse 182 der Betätigungsvorrichtung 108 kann dabei beispielsweise anhand einer an der Oberseite 188 des Gehäusekopfes 186 angeordneten Beschriftung oder anderen Markierung in gewünschter Weise relativ zu der Arbeitsplatte beziehungsweise zu der Spüle ausgerichtet werden.

Die Sensorkappe 190, welche die Oberseite 188 des Gehäusekopfes 186 bildet, ist vorzugsweise aus einem metallischen Material, insbesondere aus einem Edelstahlmaterial, gebildet.

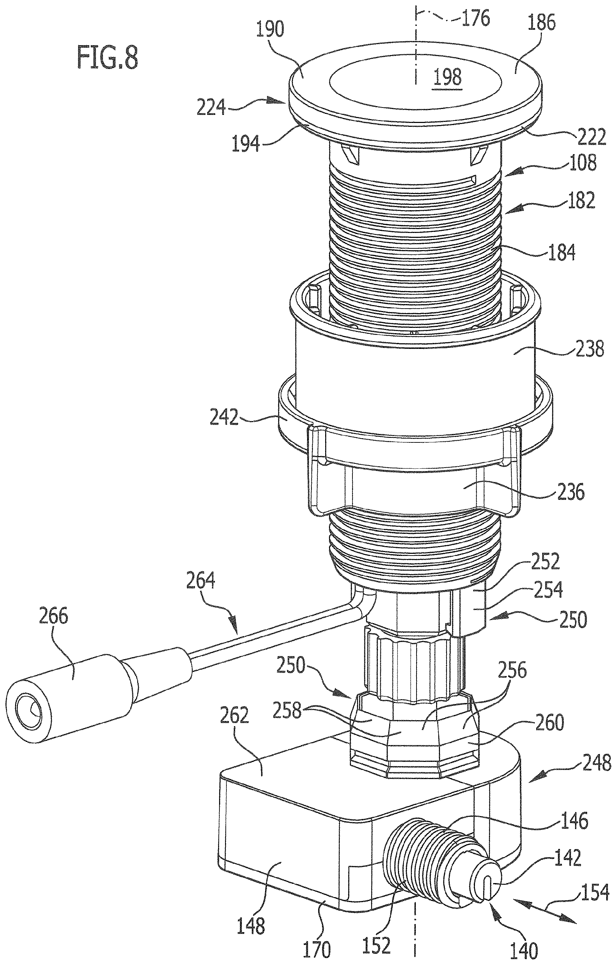

Nach dem Festlegen des Gehäuses 182 der Betätigungsvorrichtung 108 an der Arbeitsplatte beziehungsweise an der Spüle ist der in Fig. 8 dargestellte Montage-Zwischenzustand erreicht, in welchem das den Motor 180 enthaltende Gehäuse 182 noch nicht mit der das Getriebegehäuse 148, den Getriebegehäusedeckel 170, das Getriebe-Kopplungselement 160 und das Ankopplungselement 142 umfassenden Getriebeeinheit 248 verbunden ist.

Zur lösbaren Verbindung zwischen dem Gehäuse 182 und der Getriebeeinheit 248 ist eine Rastvorrichtung 250 vorgesehen, welche an dem Gehäuse 182 angeordnete erste Rastelemente 252, beispielsweise in Form von Rastzungen 254, und an der Getriebeeinheit 248 angeordnete zweite Rastelemente 256, beispielsweise in Form von Rastvorsprüngen 258, umfasst.

Insbesondere kann vorgesehen sein, dass n erste Rastelemente 252 und m · n zweite Rastelemente 256 vorgesehen sind, wobei jedes erste Rastelement 252 mit jeweils einem der zweiten Rastelemente 256 verrastet, um die Getriebeeinheit 248 an dem Gehäuse 182 festzulegen, so dass die Getriebeeinheit 248 in m verschiedenen Positionen relativ zu dem Gehäuse 182 an dem Gehäuse 182 festlegbar ist.

Insbesondere kann vorgesehen sein, dass die zweiten Rastelemente 256 regelmäßig über den Umfang eines Anschlussstutzens 260 an einer dem Gehäuse 182 zugewandten Oberseite 262 der Getriebeeinheit 248 verteilt sind.

Wenn die Rastvorrichtung 250, wie im dargestellten Ausführungsbeispiel, acht zweite Rastelemente 256 in Form von Rastvorsprüngen 258 und zwei erste Rastelemente 252 in Form von Rastzungen 254 umfasst (also n = 2 und m = 4), so ist der Anschlussstutzen 260 im Wesentlichen achteckig ausgebildet und kann die Getriebeeinheit 248 in acht verschiedenen Positionen, welche gegenüber den jeweils benachbarten Positionen um einen Winkel von jeweils 45° um die Längsmittelachse 176 der Betätigungsvorrichtung 108 verdreht sind, an das Gehäuse 182 aufgesteckt und mit demselben verrastet werden.

Somit kann auch der Führungsstutzen 152, durch welchen sich das Ankopplungselement 142 zum Ankoppeln des betätigungsvorrichtungsseitigen Endbereichs 138 des Drahtseils 134 des Bowdenzugs 111 hindurch erstreckt, in ebenso vielen Winkelpositionen bezüglich der Längsmittelachse 176 der Betätigungsvorrichtung 108 angeordnet werden, so dass der Verlauf des Bowdenzugs 111 von der Betätigungsvorrichtung 108 zu der Antriebsvorrichtung 106 möglichst kurz und windungsfrei gehalten werden kann.

Um den elektrischen Motor 180, die Steuerungsvorrichtung 218 und die Sensorvorrichtung 214 mit der für deren Betrieb erforderlichen elektrischen Spannung zu versorgen, umfasst die Betätigungsvorrichtung 108 ferner ein - vorzugsweise mindestens zweiadriges - Stromkabel 264, das an einem außerhalb des Gehäuses 182 der Betätigungsvorrichtung 108 angeordneten Ende mit einem Stecker 266 zum Anschließen an ein (nicht dargestelltes) Netzteil versehen ist.

Das dem Stecker 266 abgewandte Ende des Stromkabels 264 ist durch den Innenraum des Gehäuses 182 hindurch zu Anschlusskontakten des elektrischen Motors 180, der Steuerungsvorrichtung 218 und/oder der Sensorvorrichtung 214 geführt.

Die Steuerungsvorrichtung 218 ist über Steuerungs- und Signalleitungen mit der Sensorvorrichtung 214 und mit dem elektrischen Motor 180 verbunden.

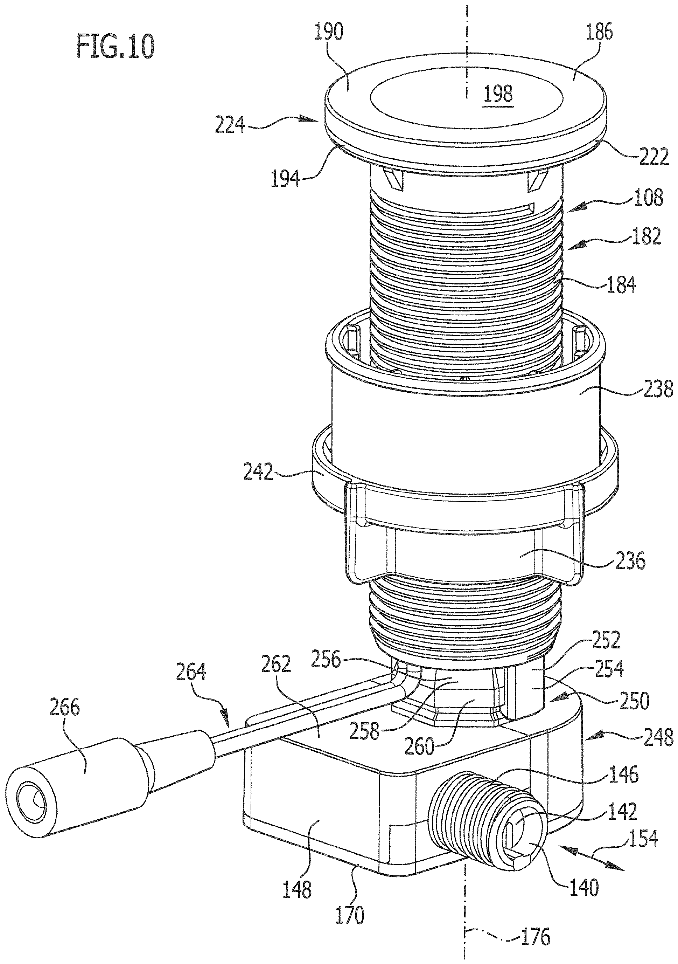

Die vorstehend beschriebene Kombination 100 aus einer Ablaufanordnung 102 mit Ventil 104 und einer Betätigungsvorrichtung 108 zum Öffnen und Schließen des Ventils 104 funktioniert wie folgt, wobei insbesondere auf die Darstellungen in den Fig. 2, 3, 9 und 10 Bezug genommen wird:
In dem in den Fig. 2 und 10 dargestellten Zustand der Kombination 100 befindet sich das Ventil 104 in seiner Schließstellung, in welcher die Ablauföffnung 114 der Ablaufanordnung 102 durch den Verschlussstopfen 118 verschlossen ist.

Das Ankopplungselement 142 der Betätigungsvorrichtung 108 befindet sich in einer ersten Arbeitsposition, in welcher das Ankopplungselement 142 relativ zu dem Führungsstutzen 152 der Getriebeeinheit 248 maximal nach innen verschoben ist.

In diesem Ausgangszustand der Kombination 100 befindet sich die optische Statusanzeigevorrichtung 224 der Betätigungsvorrichtung 108 in ihrem ersten Betriebszustand, in welchem ein schwaches Leuchten des Leuchtelements 222 anzeigt, dass das Ventil 104 sich in seiner Schließstellung befindet.

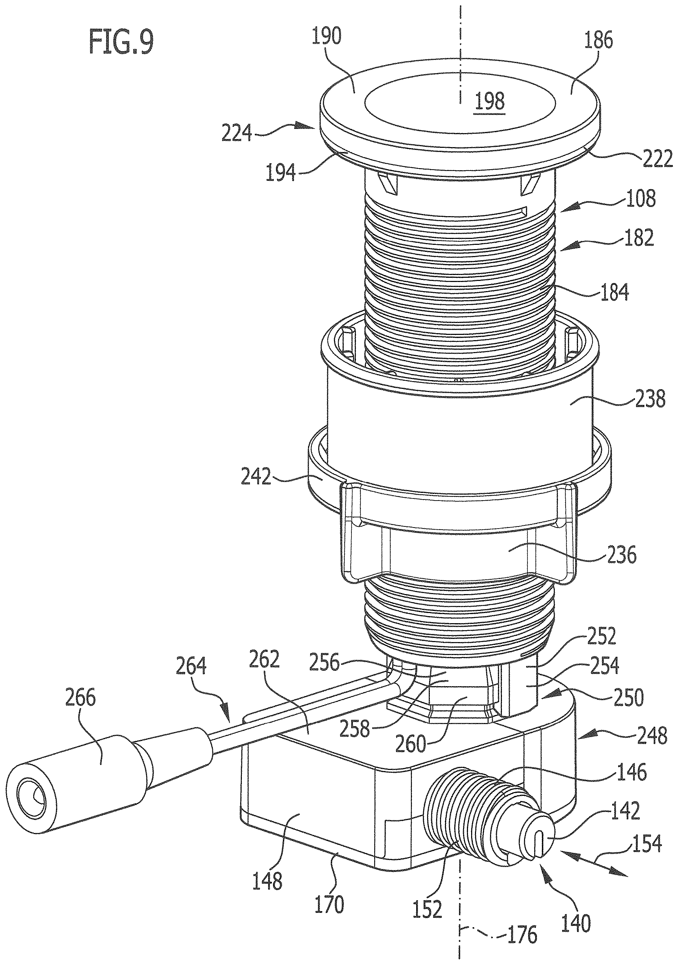

Um die Kombination 100 aus diesem Ausgangszustand in den in den Fig. 3 und 9 dargestellten Alternativzustand zu bringen, in welchem das Ventil 104 sich in seiner Offenstellung befindet und das Ankopplungselement 142 sich in einer zweiten Arbeitsposition befindet, in welcher das Ankopplungselement 142 relativ zu dem Führungsstutzen 152 maximal nach außen verschoben ist, übt eine Bedienungsperson manuell, beispielsweise durch den Druck eines Fingers, auf die Oberseite 188 der Sensorkappe 190 in deren Betätigungsbereich 198 eine nach unten gerichtete Betätigungskraft aus.

Hierdurch wird der Sensorkörper 204 in seiner Lage verändert, was eine Verformung der Kontaktelemente 206 an der Platine 210 zur Folge hat, welche mittels des kapazitiven Sensors 216 der Sensorvorrichtung 214 detektiert wird.

Bei Detektion einer solchen Verformung der Kontaktelemente 206 erzeugt die Sensorvorrichtung 214 ein Betätigungssignal, das an die Steuerungsvorrichtung 218 übermittelt wird.

Die Steuerungsvorrichtung 218 schaltet daraufhin die Leuchtmittel 220 der optischen Statusanzeigevorrichtung 224 in den zweiten Betriebszustand, in welchem das Leuchtelement 222 mit einer erhöhten Intensität leuchtet, um anzuzeigen, das ein Betätigungsvorgang erfasst worden ist.

Die Steuerungsvorrichtung 218 kann so ausgebildet, insbesondere programmiert, sein, dass sie die optische Statusanzeigevorrichtung 224 nach einer vorgegebenen Zeitdauer, beispielsweise im Bereich von 0,1 s bis 1 s, ab dem Übergang in den zweiten Betriebszustand in den dritten Betriebszustand umschaltet, in welchem die Leuchtmittel 220 abgeschaltet sind, was anzeigt, dass das Ventil 104 sich in der Offenstellung befindet.

Alternativ hierzu kann auch vorgesehen sein, dass die Steuerungsvorrichtung 218 die optische Statusanzeigevorrichtung 224 in dem zweiten Betriebszustand, welcher einen Betätigungsvorgang anzeigt, belässt, solange die Bedienungsperson einen Druck auf die Oberseite 188 der Sensorkappe 190 ausübt, und die optische Statusanzeigevorrichtung 224 erst dann in den dritten Betriebszustand umschaltet, wenn die Bedienungsperson den Betätigungsvorgang durch Beendigung des Drucks auf die Oberseite 188 der Sensorkappe 190 abschließt.

Ferner startet die Steuerungsvorrichtung 218 bei Eintreffen des Betätigungssignals von der Sensorvorrichtung 214 den elektrischen Motor 180, so dass die Motorwelle 178 - bei Betrachtung in vertikaler Richtung von oben - eine Drehung im Gegenuhrzeigersinn ausführt.

Diese Drehung der Motorwelle 178 wird über das Motor-Kopplungselement 166 und das Getriebe-Kopplungselement 160 auf den Schwenkarm 158 des Getriebe-Kopplungselements 160 übertragen und durch die gelenkige Verbindung zwischen dem Schwenkarm 158 und dem Ankopplungselement 142 in eine Linearbewegung des Ankopplungselements 142 in der Richtung aus dem Führungsstutzen 152 heraus umgewandelt.

Durch die Auswärtsbewegung des Ankopplungselements 142 bewegt sich auch der betätigungsvorrichtungsseitige Endbereich 138 des Drahtseils 134 des Bowdenzugs 111 in der Verschieberichtung 154 nach außen.

Insbesondere kann vorgesehen sein, dass das Ankopplungselement 142 vollständig im Innenraum des Getriebegehäuses 148 aufgenommen ist, wenn das Ankopplungselement 142 sich in der ersten Arbeitsposition befindet, und das Ankopplungselement 142 mit der Aufnahme 140 für den betätigungsvorrichtungsseitigen Endbereich 138 des Drahtseils 134 in im Wesentlichen horizontaler Richtung nach außen über den Führungsstutzen 152 vorsteht, wenn das Ankopplungselement 142 sich in der zweiten Arbeitsposition befindet.

Die Steuerungsvorrichtung 218 beendet die von dem Motor 180 angetriebene Drehbewegung der Motorwelle 178, sobald das Ankopplungselement 142 die zweite Arbeitsposition erreicht hat.

Durch die Verschiebung des betätigungsvorrichtungsseitigen Endbereichs 138 des Drahtseils 134 des Bowdenzugs 111 von der ersten Arbeitsstellung in die zweite Arbeitsstellung wird auch der ablaufanordnungsseitige Endbereich 132 des Drahtseils 134 um dieselbe Strecke, vorzugsweise ebenfalls in im Wesentlichen horizontaler Richtung, verschoben, wodurch der Schwenkarm 130 der Antriebsvorrichtung 106 (in der Blickrichtung der Fig. 2 und 3 gesehen im Uhrzeigersinn) um die Schwenkachse 126 geschwenkt wird.

Dies hat eine gleichsinnige Verschwenkung des Hubfingers 124 zur Folge, wodurch der Führungsstift 120 angehoben wird und der Verschlussstopfen 118 vom Bodenbereich des Kelches 112 abgehoben wird, so dass die Ablauföffnung 114 für den Durchtritt von Wasser aus dem Becken freigegeben ist (siehe Fig. 3).

Wie in den Fig. 2 und 3 dargestellt, kann oberhalb des Verschlussstopfens 118 ein Siebkorb 268 angeordnet sein, welcher vorzugsweise an einem oberen Rand des Kelches 112 aufliegt und den Verschiebeweg des Verschlussstopfens 118 nicht blockiert, so dass der Siebkorb 268 bei der Bewegung des Verschlussstopfens 118 von der Schließstellung in die Offenstellung nicht von dem Kelch 112 abgehoben wird.

Um die Kombination 100 aus dem in den Fig. 3 und 9 dargestellten Zustand, in welchem das Ventil 104 sich in seiner Offenstellung befindet und das Ankopplungselement 142 sich in der zweiten Arbeitsposition befindet, wieder in den in den Fig. 2 und 10 dargestellten Ausgangszustand zu überführen, betätigt die Bedienungsperson die Betätigungsvorrichtung 108 durch Ausüben eines Drucks, beispielsweise mittels eines Fingers, auf die Oberseite 188 der Sensorkappe 190 der Betätigungsvorrichtung 108 erneut.

Hierdurch wird wiederum der Sensorkörper 204 in seiner Lage verändert, was eine Verformung der Kontaktelemente 206 zur Folge hat, welche von der Sensorvorrichtung 214 detektiert wird.

Die Steuerungsvorrichtung 218 schaltet bei Eintreffen dieses weiteren Betätigungssignals die optische Statusanzeigevorrichtung 224, wie vorstehend bereits beschrieben, in den zweiten Betriebszustand, in welchem ein Leuchten des Leuchtelements 222 mit hoher Intensität anzeigt, dass ein Betätigungsvorgang ausgeführt worden ist.

Nach einer vorgegebenen Zeitdauer oder nach Beendigung des Betätigungsvorgangs durch die Bedienungsperson schaltet die Steuerungsvorrichtung 218 die optische Statusanzeigevorrichtung 224 wieder in den ersten Betriebszustand, in welchem ein Leuchten des Leuchtelements 222 mit geringer Intensität anzeigt, dass das Ventil 104 sich in seiner Schließstellung befindet.

Ferner nimmt die Steuerungsvorrichtung 218 bei Eintreffen des Betätigungssignals den elektrischen Motor 180 wieder in Betrieb, jedoch mit umgekehrter Drehrichtung, so dass die Motorwelle 178 nunmehr - bei Betrachtung in vertikaler Richtung von oben - im Uhrzeigersinn gedreht wird.

Diese Drehbewegung der Motorwelle 178 wird über das Motor-Kopplungselement 166 und das Getriebe-Kopplungselement 160 auf den Schwenkarm 158 des Getriebe-Kopplungselements 160 übertragen und durch die gelenkige Verbindung zwischen dem Schwenkarm 158 und dem Ankopplungselement 142 in eine Linearbewegung des Ankopplungselements 142 relativ zu dem Führungsstutzen 152 des Getriebegehäuses 148 umgewandelt.

Das Ankopplungselement 142 bewegt sich hierdurch von der zweiten Arbeitsstellung, in welcher die Aufnahme 140 für den betätigungsvorrichtungsseitigen Endbereich 138 des Drahtseils 134 des Bowdenzugs 111 vorzugsweise außerhalb des Führungsstutzens 152 angeordnet ist, in die erste Arbeitsposition zurück, in welcher das Ankopplungselement 142 vorzugsweise im Wesentlichen vollständig im Innenraum des Getriebegehäuses 148 angeordnet ist.

Durch die Einwärtsbewegung des Ankopplungselements 142 von der zweiten Arbeitsposition in die erste Arbeitsposition wird auch der darin aufgenommene betätigungsvorrichtungsseitige Endbereich 138 des Drahtseils 134 des Bowdenzugs 111 in im Wesentlichen horizontaler Richtung in den Innenraum des Getriebegehäuses 148 verschoben, was eine entsprechende Verschiebung des ablaufanordnungsseitigen Endbereichs 132 des Drahtseils 134 zur Folge hat.

Hierdurch wird der Schwenkarm 130 (in der Blickrichtung der Fig. 2 und 3 gesehen im Gegenuhrzeigersinn) um die Schwenkachse 126 geschwenkt. Dadurch wird der Hubfinger 124 der Antriebsvorrichtung 106 gleichsinnig geschwenkt, was eine Absenkung des Führungsstifts 120 und somit des Verschlussstopfens 118 zur Folge hat, so dass die Ablauföffnung 114 des Kelches 112 wieder durch den Verschlussstopfen 118 verschlossen wird und das Ventil 104 sich in der Schließstellung befindet.

Grundsätzlich ist es natürlich möglich, das Kraftübertragungselement 110, insbesondere in Form eines Bowdenzugs 111, so an die Antriebsvorrichtung 106 der Ablaufanordnung 102 anzukoppeln, dass der ersten Arbeitsposition des Ankopplungselements 142 der Betätigungsvorrichtung 108 statt der Schließstellung des Ventils 104 dessen Offenstellung zugeordnet ist, und dass der zweiten Arbeitsposition des Ankopplungselements 142 der Betätigungsvorrichtung 108 statt der Offenstellung des Ventils 104 die Schließstellung des Ventils 104 zugeordnet ist.

Ferner kann die Getriebeeinheit 248 der Betätigungsvorrichtung 108 alternativ zu der dargestellten Ausführungsform auch so ausgebildet sein, dass das Ankopplungselement 142 durch eine Drehung der Motorwelle 178 - vertikal von oben gesehen - im Uhrzeigersinn von der ersten Arbeitsposition in die zweite Arbeitsposition überführt wird und durch eine Drehung der Motorwelle 178 - vertikal von oben gesehen - im Gegenuhrzeigersinn von der zweiten Arbeitsposition in die erste Arbeitsposition überführt wird.

## Patentansprüche

1. Betätigungsvorrichtung zum Öffnen und Schließen eines Ventils (104) einer Ablaufanordnung (102) für ein Becken, umfassend
ein Ankopplungselement (142) zum Ankoppeln eines Kraftübertragungselements (110) an die Betätigungsvorrichtung (108),
einen elektrischen Motor (180) zum Antreiben einer Bewegung des Ankopplungselements (142) von einer ersten Arbeitsposition in eine zweite Arbeitsposition und einer Bewegung des Ankopplungselements (142) von der zweiten Arbeitsposition in die erste Arbeitsposition,
eine Steuerungsvorrichtung (218) zum Steuern des Motors (180) und eine Sensorvorrichtung (214) zum Erfassen eines von einer Bedienungsperson durchgeführten Betätigungsvorgangs,
wobei der Motor (180), die Steuerungsvorrichtung (218) und die Sensorvorrichtung (214) in einem gemeinsamen Gehäuse (182) angeordnet sind,
wobei die Betätigungsvorrichtung (108) eine Getriebeeinheit (248) umfasst, welche eine von dem Motor (180) erzeugte Drehbewegung in eine Linearbewegung des Ankopplungselements (142) umwandelt, und
wobei das Ankopplungselement (142) verschiebbar an der Getriebeeinheit (248) geführt ist,
**dadurch gekennzeichnet,**
**dass** die Getriebeeinheit (248) lösbar an dem Gehäuse (182) der Betätigungsvorrichtung (108) festlegbar ist.

2. Betätigungsvorrichtung nach Anspruch 1, **dadurch gekennzeichnet, dass** das Gehäuse (182) einen Gehäusekopf (186) umfasst, welcher einen Gehäuseflansch (202) zum Auflegen des Gehäuses (182) auf eine Oberseite einer Arbeitsplatte oder einer Spüle aufweist.

3. Betätigungsvorrichtung nach Anspruch 2, **dadurch gekennzeichnet, dass** der Gehäuseflansch (202) eine Höhe von höchstens ungefähr 10 mm, vorzugsweise von höchstens ungefähr 7 mm, insbesondere von höchstens ungefähr 5 mm, aufweist.

4. Betätigungsvorrichtung nach einem der Ansprüche 1 bis 3, **dadurch gekennzeichnet, dass** das Gehäuse (182) ein Außengewinde (232) aufweist, in welches eine Haltemutter (236) eingreift.

5. Betätigungsvorrichtung nach einem der Ansprüche 1 bis 4, **dadurch gekennzeichnet, dass** die Betätigungsvorrichtung (108) eine optische Statusanzeigevorrichtung (224) zum Anzeigen des aktuellen Status der Betätigungsvorrichtung (108) umfasst.

6. Betätigungsvorrichtung nach Anspruch 5, **dadurch gekennzeichnet, dass** die Statusanzeigevorrichtung (224) ein im Betrieb der Betätigungsvorrichtung (108) für eine Bedienungsperson sichtbares Leuchtelement (222) umfasst.

7. Betätigungsvorrichtung nach Anspruch 6, **dadurch gekennzeichnet, dass** die Leuchtintensität des Leuchtelements (222) in Abhängigkeit von dem Status der Betätigungsvorrichtung (108) in mindestens zwei, vorzugsweise in mindestens drei, voneinander verschiedene Stufen schaltbar ist.

8. Betätigungsvorrichtung nach einem der Ansprüche 1 bis 7, **dadurch gekennzeichnet, dass** die Getriebeeinheit (248) an dem Gehäuse (182) der Betätigungsvorrichtung (108) verrastbar ist.

9. Betätigungsvorrichtung nach einem der Ansprüche 1 bis 8, **dadurch gekennzeichnet, dass** die Getriebeeinheit (248) in mehreren verschiedenen Winkelpositionen bezüglich einer vertikalen Längsmittelachse (176) der Betätigungsvorrichtung (108) an dem Gehäuse (182) der Betätigungsvorrichtung (108) festlegbar ist.

10. Betätigungsvorrichtung nach einem der Ansprüche 1 bis 9, **dadurch gekennzeichnet, dass** das Ankopplungselement (142) im montierten Zustand der Betätigungsvorrichtung (108) in im Wesentlichen horizontaler Richtung von der ersten Arbeitsposition in die zweite Arbeitsposition bewegbar ist.

11. Betätigungsvorrichtung nach einem der Ansprüche 2 bis 10, wobei die Ansprüche 4, 5 und 8 bis 10 mindestens vom Anspruch 2 abhängen, **dadurch gekennzeichnet, dass** die Steuerungsvorrichtung (218) an einer Platine (210) angeordnet ist, welche zwischen dem Gehäusekopf (186) des Gehäuses (182) und dem Motor (180) angeordnet ist.

12. Betätigungsvorrichtung nach Anspruch 11, **dadurch gekennzeichnet, dass** die Platine (210) eine Durchtrittsöffnung (226) aufweist, durch welche ein Endbereich (228) des Motors (180) sich hindurcherstreckt.

13. Betätigungsvorrichtung nach einem der Ansprüche 11 oder 12, **dadurch gekennzeichnet, dass** die Sensorvorrichtung (214) an der Platine (210) angeordnet ist.

14. Betätigungsvorrichtung nach einem der Ansprüche 1 bis 13, **dadurch gekennzeichnet, dass** die Sensorvorrichtung (214) mindestens ein federelastisches Kontaktelement (206) und/oder mindestens einen kapazitiven Sensor (216) umfasst.

15. Kombination aus einer Ablaufanordnung (102) für ein Becken, welche ein Ventil (104) zum Verschließen eines Beckenablaufs und eine Antriebsvorrichtung (106) zum Antreiben einer Bewegung des Ventils (104) von einer Schließstellung in eine Offenstellung umfasst,
einer Betätigungsvorrichtung (108) nach einem der Ansprüche 1 bis 14 und
einem Kraftübertragungselement (110) zum Koppeln der Betätigungsvorrichtung (108) und der Antriebsvorrichtung (106).

## Claims

1. Actuating device for opening and closing a valve (104) of a drain arrangement (102) for a basin, comprising
a coupling element (142) for coupling a force-transmission element (110) to the actuating device (108),
an electric motor (180) for driving a movement of the coupling element (142) from a first working position into a second working position and a movement of the coupling element (142) from the second working position into the first working position,
a control device (218) for controlling the motor (180), and
a sensor device (214) for detecting an actuation operation performed by an operator,
wherein the motor (180), the control device (218), and the sensor device (214) are arranged in a common housing (182),
wherein the actuating device (108) comprises a transmission unit (248), which converts a rotational movement produced by the motor (180) into a linear movement of the coupling element (142), and
wherein the coupling element (142) is displaceably guided on the transmission unit (248),
**characterized in that**
the transmission unit (248) is releasably fixable on the housing (182) of the actuating device (108).

2. Actuating device in accordance with Claim 1, **characterized in that** the housing (182) comprises a housing head (186), which has a housing flange (202) for placing the housing (182) on a top side of a countertop or a sink.

3. Actuating device in accordance with Claim 2, **characterized in that** the housing flange (202) has a height of at most about 10 mm, preferably at most about 7 mm, in particular at most about 5 mm.

4. Actuating device in accordance with any one of Claims 1 to 3, **characterized in that** the housing (182) has an external thread (232) in which a retaining nut (236) engages.

5. Actuating device in accordance with any one of Claims 1 to 4, **characterized in that** the actuating device (108) comprises an optical status display device (224) for displaying the current status of the actuating device (108).

6. Actuating device in accordance with Claim 5, **characterized in that** the status display device (224) comprises a luminous element (222) that is visible to an operator in the operation of the actuating device (108).

7. Actuating device in accordance with Claim 6, **characterized in that** the light intensity of the luminous element (222) is switchable into at least two, preferably into at least three, mutually different levels in dependence on the status of the actuating device (108).

8. Actuating device in accordance with any one of Claims 1 to 7, **characterized in that** the transmission unit (248) is latchable to the housing (182) of the actuating device (108).

9. Actuating device in accordance with any one of Claims 1 to 8, **characterized in that** the transmission unit (248) is fixable on the housing (182) of the actuating device (108) in a plurality of different angular positions in relation to a vertical longitudinal middle axis (176) of the actuating device (108).

10. Actuating device in accordance with any one of Claims 1 to 9, **characterized in that** the coupling element (142) in the assembled state of the actuating device (108) is moveable in a substantially horizontal direction from the first working position into the second working position.

11. Actuating device in accordance with any one of Claims 2 to 10, wherein Claims 4, 5, and 8 to 10 are dependent at least on Claim 2, **characterized in that** the control device (218) is arranged on a circuit board (210), which is arranged between the housing head (186) of the housing (182) and the motor (180).

12. Actuating device in accordance with Claim 11, **characterized in that** the circuit board (210) has a through-opening (226), through which an end region (228) of the motor (180) extends.

13. Actuating device in accordance with either of Claims 11 or 12, **characterized in that** the sensor device (214) is arranged on the circuit board (210).

14. Actuating device in accordance with any one of Claims 1 to 13, **characterized in that** the sensor device (214) comprises at least one resilient contact element (206) and/or at least one capacitive sensor (216).

15. Combination of a drain arrangement (102) for a basin, which comprises a valve (104) for closing a basin drain and a drive device (106) for driving a movement of the valve (104) from a closed position into an open position,
an actuating device (108) in accordance with any one of Claims 1 to 14, and
a force-transmission element (110) for coupling the actuating device (108) and the drive device (106).

## Revendications

1. Dispositif d'actionnement pour ouvrir et fermer un clapet (104) d'un ensemble d'évacuation (102) pour un bac, comprenant un élément d'accouplement (142) pour accoupler un élément de transmission de force (110) au dispositif d'actionnement (108),
un moteur électrique (180) pour entraîner un déplacement de l'élément d'accouplement (142) depuis une première position de travail dans une deuxième position de travail et un déplacement de l'élément d'accouplement (142) depuis la deuxième position de travail dans la première position de travail,
un dispositif de commande (218) pour commander le moteur (180) et
un dispositif de capteur (214) pour détecter une opération d'actionnement mise en œuvre par un opérateur, dans lequel le moteur (180), le dispositif de commande (218) et le dispositif de capteur (214) sont disposés dans un boîtier (182) commun,
dans lequel le dispositif d'actionnement (108) comprend une unité de transmission (248), laquelle transforme un déplacement de rotation généré par le moteur (180) en un déplacement linéaire de l'élément d'accouplement (142), et
dans lequel l'élément d'accouplement (142) est guidé de manière à pouvoir être coulissé au niveau de l'unité de transmission (248),
**caractérisé en ce que** l'unité de transmission (248) peut être immobilisée de manière amovible au niveau du boîtier (182) du dispositif d'actionnement (108).

2. Dispositif d'actionnement selon la revendication 1, **caractérisé en ce que** le boîtier (182) comprend une tête de boîtier (186), laquelle présente une bride de boîtier (202) pour placer le boîtier (182) sur un côté supérieur d'une plaque de travail ou d'un évier.

3. Dispositif d'actionnement selon la revendication 2, **caractérisé en ce que** la bride de boîtier (202) présente une hauteur d'environ 10 mm au maximum, de préférence d'environ 7 mm au maximum, en particulier d'environ 5 mm au maximum.

4. Dispositif d'actionnement selon l'une quelconque des revendications 1 à 3, **caractérisé en ce que** le boîtier (182) présente un filetage extérieur (232), avec lequel un écrou de maintien (236) vient en prise.

5. Dispositif d'actionnement selon l'une quelconque des revendications 1 à 4, **caractérisé en ce que** le dispositif d'actionnement (108) comprend un dispositif d'affichage de statut (224) optique pour afficher le statut instantané du dispositif d'actionnement (108).

6. Dispositif d'actionnement selon la revendication 5, **caractérisé en ce que** le dispositif d'affichage de statut (224) comprend un élément d'éclairage (222) visible pour un opérateur lors du fonctionnement du dispositif d'actionnement (108).

7. Dispositif d'actionnement selon la revendication 6, **caractérisé en ce que** l'intensité d'éclairage de l'élément d'éclairage (222) peut être commutée en fonction du statut du dispositif d'actionnement (108) dans au moins deux, de préférence dans au moins trois, paliers différents les uns des autres.

8. Dispositif d'actionnement selon l'une quelconque des revendications 1 à 7, **caractérisé en ce que** l'unité de transmission (248) peut être enclenchée au niveau du boîtier (182) du dispositif d'actionnement (108).

9. Dispositif d'actionnement selon l'une quelconque des revendications 1 à 8, **caractérisé en ce que** l'unité de transmission (248) peut être immobilisée dans plusieurs positions angulaires différentes par rapport à un axe central longitudinal (176) vertical du dispositif d'actionnement (108) au niveau du boîtier (182) du dispositif d'actionnement (108).

10. Dispositif d'actionnement selon l'une quelconque des revendications 1 à 9, **caractérisé en ce que** l'élément d'accouplement (142) peut être déplacé dans l'état monté du dispositif d'actionnement (108) dans une direction sensiblement horizontale depuis la première position de travail dans la deuxième position de travail.

11. Dispositif d'actionnement selon l'une quelconque des revendications 2 à 10, dans lequel les revendications 4, 5 et 8 à 10 dépendent au moins de la revendication 2, **caractérisé en ce que** le dispositif de commande (218) est disposé au niveau d'une platine (210), laquelle est disposée entre la tête de boîtier (186) du boîtier (182) et le moteur (180).

12. Dispositif d'actionnement selon la revendication 11, **caractérisé en ce que** la platine (210) présente une ouverture de passage (226), à travers laquelle une zone d'extrémité (228) du moteur (180) s'étend.

13. Dispositif d'actionnement selon l'une quelconque des revendications 11 ou 12, **caractérisé en ce que** le dispositif de capteur (214) est disposé au niveau de la platine (210).

14. Dispositif d'actionnement selon l'une quelconque des revendications 1 à 13, **caractérisé en ce que** le dispositif de capteur (214) comprend au moins un élément de contact (206) élastique comme un ressort et/ou au moins un capteur (216) capacitif.

15. Combinaison composée d'un ensemble d'évacuation (102) pour un bac, laquelle comprend un clapet (104) pour fermer une évacuation de bac et un dispositif d'entraînement (106) pour entraîner un déplacement du clapet (104) depuis une position de fermeture dans une position d'ouverture,
un dispositif d'actionnement (108) selon l'une quelconque des revendications 1 à 14, et
un élément de transfert de force (110) pour coupler le dispositif d'actionnement (108) et le dispositif d'entraînement (106).
